# EUROPÄISCHE PATENTSCHRIFT

(11) **EP 2 812 542 B1**
(45) Veröffentlichungstag und Bekanntmachung des Hinweises auf die Patenterteilung: **16.06.2021**
(21) Anmeldenummer: 13713098.5
(22) Anmeldetag: 12.03.2013
(51) Int. Cl.: F01K 3/12, F01K 7/22, F22B 1/28, F22G 1/16, F22B 1/02, F01K 23/10

(54) **ENERGIESPEICHERKRAFTWERK UND VERFAHREN ZUM BETREIBEN EINES SOLCHEN KRAFTWERKS**
ENERGY STORAGE POWER PLANT AND METHOD FOR OPERATING SUCH A POWER PLANT
CENTRALE D'ACCUMULATION D'ÉNERGIE ET PROCÉDÉ DE FONCTIONNEMENT D'UNE TELLE CENTRALE

(30) Priorität: 15.03.2012 DE 102012204081
(43) Veröffentlichungstag der Anmeldung: 17.12.2014
(73) Patentinhaber: Siemens Energy Global GmbH & Co. KG, 81739 München (DE)
(72) Erfinder: BRUNHUBER, Christian, 91275 Auerbach (DE); ZIMMERMANN, Gerhard, 91315 Höchstadt/Aisch (DE); GRAEBER, Carsten, 91056 Erlangen (DE)
(86) Internationale Anmeldenummer: PCT/EP2013/055027
(87) Internationale Veröffentlichungsnummer: WO 2013/135718

(56) Entgegenhaltungen:
- EP-A1- 1 577 549
- WO-A1-2006/007733
- WO-A1-2007/134466
- WO-A1-2013/014178
- WO-A2-2012/136201
- DE-A1- 2 110 911
- GB-A- 1 196 336
- None

## Beschreibung

Die vorliegende Erfindung betrifft ein Energiespeicherkraftwerk zur Nutzbarmachung von thermischer Energie zur elektrischen Stromgewinnung, welches auch zur Überführung von elektrischer Energie in thermische Energie geeignet ist. Weiter betrifft die vorliegende Erfindung ein Verfahren zum Betreiben eines solchen Energiespeicherkraftwerks.

Energiespeicherkraftwerke dienen in erster Linie zur Deckung von Spitzenlastleistungen, die zu Hauptverbrauchszeiten von elektrischer Energie nachgefragt werden. Weiter sind Energiespeicherkraftwerke essentiell bei der Bereitstellung von Regelleistung zur Stromnetzregulierung.

Dabei wird elektrische Energie zu Zeiten des geringen elektrischen Energieverbrauchs gespeichert und bei hoher Leistungsnachfrage zeitversetzt abgegeben. Herkömmliche Kraftwerke sind meist aus technischen Gründen nicht in der Lage, ausreichend schnell auf Verbrauchsschwankungen im elektrischen Stromnetz zu reagieren und auch kurzzeitig hohe Leistungen zur Verfügung zu stellen. Um solchen Verbrauchsschwankungen gerecht werden zu können, werden Energiespeicherkraftwerke eingesetzt, die auch relativ kurzfristig hohe elektrische Leistungen zu liefern im Stande sind.

Aus dem Stand der Technik bekannte Energiespeicherkraftwerke unterscheiden sich in erster Linie durch die Form, in welcher die elektrische Energie zwischengespeichert wird. Energiespeicherkraftwerke sind zum Beispiel in den Dokumenten WO 2013/014178 A1, WO 2012/136201 A2, WO 2006/007733 A1 und WO 2007/134466 A1 beschrieben. Die bekannteste Art von Energiespeicherkraftwerken stellen die Wasserspeicherkraftwerke dar bzw. Pumpspeicherkraftwerke, die bei verbrauchsschwachen Zeiten Wasser in einen Speicher pumpen, dessen Höhenniveau in Bezug zur Erdoberfläche dem darin befindlichen Wasser eine erhöhte potentielle Energie zukommen lässt. Weitere Arten von Energiespeicherkraftwerken speichern die elektrisch anfallende Energie nicht als potentielle Energie sondern als chemische oder physikalische Energie, z.B. in Form von Wärme oder Druckluft.

Viele dieser Typen von Energiespeicherkraftwerken unterliegen geologischen bzw. bauspezifischen Beschränkungen, so dass ihre Vorsehung oftmals ortsabhängig erfolgen muss. Zudem erfordern diese Technologien mitunter auch hohe Kosten bei der Realisierung, die einen wirtschaftlichen Erfolg oftmals in Frage stellen. Ein weiterer Nachteil der bisher aus dem Stand der Technik bekannten Energiespeicherkraftwerke ist darin zu sehen, dass die Abgabeleistungen oftmals zu gering sind bzw. nicht über ausreichend lange Zeitspannen abgegeben werden können.

Insofern ist es erforderlich, ein Energiespeicherkraftwerk vorzuschlagen, welches in der Lage ist, die aus dem Stand der Technik bekannten Nachteile zu überwinden.

Insbesondere stellt es sich als erforderlich dar, ein Energiespeicherkraftwerk vorzuschlagen, welches hinsichtlich seines örtlichen Einsatzgebietes relativ wenigen Einschränkungen unterliegt. Weiter soll ein derartiges Energiespeicherkraftwerk auch in der Lage sein, während Spitzenlastzeiten, die auch mehrere Stunden dauern können, ausreichende Mengen an elektrischer Leistung zu liefern. Dies soll darüber hinaus zu relativ geringen Kosten möglich sein. Weiterhin ist es erwünscht, ein Energiespeicherkraftwerk vorzuschlagen, welches dazu geeignet ist, Wasser in einem Dampfprozess mittels thermischer Energie vorteilhaft und kostengünstig aufzubereiten und diese somit für die Stromerzeugung in einem Stromerzeugungsprozess nutzbar zu machen.

Diese der vorliegenden Erfindung zugrundeliegenden Aufgaben werden durch ein Energiespeicherkraftwerk gemäß Patentanspruch 1 bzw. durch ein Verfahren zum Betreiben eines solchen Energiespeicherkraftwerks nach Patentanspruch 9 gelöst.

Insbesondere wird die Erfindungsaufgabe durch ein Energiespeicherkraftwerk zur elektrischen Stromgewinnung gelöst, welches auch zur Überführung von elektrischer Energie in thermische Energie geeignet ist, wobei die thermische Energie bis zu einem Zeitpunkt des Bedarfs in wenigstens zwei thermischen Speichern zwischengespeichert werden kann und bei Bedarf zur Erhöhung des Energiegehalts von Wasser in einem Wasserkreislauf abgerufen werden kann, umfassend:
- die wenigstens zwei thermischen Speicher mit jeweils mindestens einer Wandelvorrichtung, die erlaubt, elektrische Energie in thermische Energie direkt oder indirekt zu wandeln, wobei die wenigstens zwei thermischen Speicher durch Zwischenspeicherung dieser thermischen Energie thermisch aufgeladen werden können, und wobei ein thermischer Speicher zur Speicherung von fühlbarer Wärme und ein thermischer Speicher zur Speicherung von latenter Wärme vorgesehen ist, sowie
- wenigstens eine Stromerzeugungseinheit, die mit dem Wasser in dem Wasserkreislauf, dessen Energiegehalt durch die zwischengespeicherte thermische Energie erhöht wurde, betrieben werden kann, um bei Betrieb elektrischen Strom zu erzeugen.

Fernerhin wird die der Erfindung zugrundeliegende Aufgabe durch ein Verfahren zum Betreiben eines solchen Energiespeicherkraftwerks gelöst, wobei es die folgenden Schritte aufweist:
- Betreiben der Wandelvorrichtung, um elektrische Energie in thermische Energie direkt oder indirekt zu wandeln, wobei wenigstens einer der wenigstens zwei thermischen Speicher durch Zwischenspeicherung dieser thermischen Energie thermisch aufgeladen wird;
- Betreiben der wenigstens einen Stromerzeugungseinheit mit Hilfe des Wassers in dem Wasserkreislauf, dessen Energiegehalt durch die zwischengespeicherte thermische Energie aus dem wenigstens einen thermischen Speicher erhöht wurde, um bei Betrieb elektrischen Strom zu erzeugen;
   wobei insbesondere ein thermischer Speicher temperaturgesteuert aufgeladen und/oder entladen wird.

Die Erfindung macht sich zu Nutzen, dass elektrische Energie, die bei Zeiten der Überschussproduktion von elektrischer Energie relativ kostengünstig erworben werden kann, in thermische Energie überführt werden kann, die in geeigneter Weise in dem Energiespeicherkraftwerk zwischengespeichert wird, und bei Bedarf erneut der Stromerzeugung zugeführt werden kann. Die Überführung von elektrischer Energie in thermische Energie kann hierbei mit bekannten Mitteln und Verfahren erreicht werden. Die so erzeugte thermische Energie lässt sich kontrolliert in dem Energiespeicherkraftwerk zwischenspeichern bis erneuter Energiebedarf vorherrscht. Die thermische Energie kann anschließend mit einer geringen thermischen Verlustleistung effizient auf das Wasser in den Wasserkreislauf übertragen werden. Eine geringe Verlustleistung wird erreicht einerseits aufgrund der Integration des thermischen Speichers in das Kraftwerk und den damit relativ kurzen Versorgungswegen, andererseits aus der gut beherrschten Übertragung von Wärme auf Wasser in einem Wasserkreislauf.

Zudem erlaubt das Vorsehen von zwei unterschiedlichen thermischen Speichern eine effiziente Wasseraufbereitung in einem Dampfprozess. Insbesondere eignet sich das Vorsehen eines thermischen Speichers zur Speicherung von fühlbarer Wärme und ein thermischer Speicher zur Speicherung von latenter Wärme zu einer besonders effizienten schrittweisen Aufbereitung des Wassers, da unterschiedliche Mengen von thermischer Energie bei unterschiedlichen Temperaturniveaus auf das Wasser übertragen werden können. Hierbei ist der thermische Speicher zur Speicherung von latenter Wärme dazu ausgebildet, thermische Energie auf einem im Wesentlichen konstanten Temperaturniveau abzugeben. Dies eignet sich beispielsweise besonders zum Verdampfen eines Wärmefluids. Der thermische Speicher zur Speicherung von fühlbarer Wärme ist dagegen besonders geeignet, in einem vorbestimmten Temperaturbereich zwischen einem oberen und einem unteren Temperaturgrenzwert thermische Energie abzugeben. Dies eignet sich beispielsweise besonders zur Überhitzung eines Wärmefluids.

Bevorzugt sind hierbei Energiespeicher zur Aufnahme und Abgabe latenter Energie auf Grundlage von geschmolzenen Salzen bzw. PCM (Phase Change Materials) zu erwähnen. Derartige Materialien erlauben die Speicherung von thermischer Energie bei relativ hohen Temperaturniveaus (≥ 100 °C). Insbesondere eignen sich derartige Materialien zur Bereitstellung eines thermischen Speichers, welcher zur Überhitzung von bereits erzeugtem Wasserdampf in dem Wasserkreislauf eingesetzt wird, da sie auch zersetzungsfrei bei Temperaturen von über 400°C einsetzbar sind.

Thermische Speicher zur Zwischenspeicherung von fühlbarer Wärme können auch auf Grundlage von kostengünstigen Materialien wie beispielsweise Beton, Gestein oder Sand bereitgestellt werden. Ebenso sind auch Thermoöle für den Einsatz in thermischen Speichern zur Speicherung von fühlbarer Wärme geeignet. Für Temperaturniveaus von kleiner als 300 °C eignen sich die Thermoöle besonders.

Die Übertragung der thermischen Energie an das Wasser in dem Wasserkreislauf dient typischerweise dazu, das Wasser vorzuwärmen bzw. es bei vorgegebenen Bedingungen zur Verdampfung zu bringen. Ebenfalls ist es denkbar, dass die zwischengespeicherte thermische Energie zur Aufbereitung des Dampfes, insbesondere zur Überhitzung, dient. Dementsprechend kann die thermische Energie aus dem Speicher zur geeigneten Konditionierung des Wassers in dem Wasserkreislauf bei unterschiedlichen Prozessvoraussetzungen eingesetzt werden. Besonders vorteilhaft ist es, wenn die Verdampfung des Wassers mittels Wärme erfolgt, welche aus dem thermischen Speicher entnommen ist, der zu Zwischenspeicherung von latenter Wärme vorgesehen ist. Ebenfalls ist es vorteilhaft, dass Wärme aus dem thermischen Speicher zur Speicherung von fühlbarer Wärme zur Überhitzung von bereits erzeugtem Dampf eingesetzt wird.

In vorteilhafter Weise wird das Verfahren zum Betreiben eines Energiespeicherkraftwerks temperaturgesteuert aufgeladen und/oder entladen. Durch die Temperatursteuerung kann einerseits der Ladezustand in dem thermischen Speicher geeignet beeinflusst werden, andererseits ist es möglich, bei temperaturgesteuerter Entnahme der thermischen Energie einen vorteilhaften Grad an Kontrolle über den Entladezustand zu gewinnen. Weiter lässt sich anhand der vorherrschenden Temperaturbedingungen in dem thermischen Speicher die dort noch zur Verfügung stehende thermische Energie abschätzen, woraus die maximal möglichen Entnahmemengen an thermischer Energie leicht berechnet werden können.

Gemäß einer ersten besonders bevorzugten Ausführungsform des erfindungsgemäßen Energiespeicherkraftwerks ist vorgesehen, dass wenigstens einer, bevorzugt beide thermischen Speicher modular aufgebaut sind, wobei die jeweiligen Module bei Bedarf unabhängig voneinander mit thermischer Energie aufgeladen und/oder bei Bedarf unabhängig voneinander zur Übertragung von thermischer Energie an das Wasser in dem Wasserkreislauf entladen werden können. Durch den modularen Aufbau eines thermischen Speichers kann die zu speichernde Energiemenge variabel gesteuert bzw. geregelt werden, so dass ein höherer Grad an Kotrolle über den Vorgang der thermischen Energieabgabe an das Wasser in dem Wasserkreislauf erreicht werden kann. Weiter ist es auch möglich, Module des thermischen Speichers mit unterschiedlich großen Mengen an thermischer Energie aufzuladen, ohne jedoch etwa vorbestimmte Minimaltemperaturen unterschreiten zu müssen. Ebenso kann der Aufladevorgang derart erfolgen, dass das Temperaturniveau eines Moduls des thermischen Speichers eine vorgegebene Zieltemperatur erreicht. Und weiterhin ist es aufgrund des modularen Aufbaus auch möglich, dass unterschiedlich große Mengen an thermischer Energie bei im Wesentlichen gleichbleibendem Temperaturniveau abgegeben bzw. aufgenommen werden können.

So ist es beispielsweise auch vorteilhaft, technisch vorgegebene Zieltemperaturen während der Vorwärmung des Wassers in dem Wasserkreislauf bzw. während des Verdampfens oder Überhitzens des Dampfes des Wassers in dem Wasserkreislauf einzustellen, um damit eine effizientere Nutzung aller thermischer Quellen zu erreichen. Insbesondere bei der Rückverstromung mittels einer Dampfturbine ist zu berücksichtigen, dass unterschiedliche Rückverstromungsleistungen voneinander abweichende Dampfmassenströme erfordern, weshalb in diesem Fällen dann auch unterschiedliche thermische Leistungen aus dem thermischen Speicher abgerufen werden müssen. Der modulare Aufbau des thermischen Speichers erlaubt in diesem Zusammenhang den Betrieb eines hinsichtlich seines fluiddynamischen Verhaltens stabilen Wasserdampfkreislaufes wodurch die zur Rückverstromung erforderlichen Dampfzustände gut kontrolliert werden können.

Gemäß einer weiteren Ausführungsform des erfindungsgemäßen Energiespeicherkraftwerks ist vorgesehen, dass wenigstens einer, bevorzugt beide der thermischen Speicher ihre thermische Energie an das Wasser in dem Wasserkreislauf mittelbar über einen oder mehrere Wärmetauscher übertragen. Der Wärmetauscher bedingt zwar einerseits eine geringe Verringerung des Wärmeübertragungswirkungsgrades, jedoch stellt er eine prozesstechnische Verbesserung dar, da über ihn in kontrollierter Weise die Wärme aus dem thermischen Speicher auf das Wasser in dem Wasserkreislauf übertragen werden kann. Zudem ist es möglich, den Wärmetauscher über einzelne Module des thermischen Speichers gezielt zu versorgen. Dementsprechend kann insbesondere das Temperaturniveau des Wärmetauschers bzw. die zeitliche Veränderung des Temperaturniveaus des Wärmetauschers geeignet eingestellt werden, indem einzelne Module ihre Wärme zu unterschiedlichen Zeiten oder auf einem unterschiedlichen Temperaturniveau an den Wärmetauscher abgeben. Bevorzugt ist ein Wärmetauscher mit einer Mehrzahl an Modulen, die zu verschiedenen Zeitpunkten unterschiedliche Mengen an thermischer Energie an den Wärmetauscher übertragen können. Der Wärmetauscher kann hierbei im einfachsten Fall als Wärmespeicher zur thermischen Zwischenspeicherung der von den einzelnen Modulen übertragenen thermischen Energie ausgeführt sein.

Entsprechend einer bevorzugten Weiterführung der vorab beschriebenen Ausführungsform ist vorgesehen, dass der Wärmetauscher ebenfalls noch durch eine andere Wärmequelle mit thermischer Energie versorgt werden kann. Eine derartige Wärmequelle ist insbesondere eine externe Wärmequelle, deren thermische Energie aus einem Verbrennungsvorgang, besonders bevorzugt aus einem Kraftwerksprozess stammt. Besonders bevorzugt kann hierbei die Abwärme einer Gasturbine an den Wärmetauscher übertragen werden. Beispielsweise kann der Wärmetauscher auch von einem Dampfkraftwerk oder einem gekoppelten Gas-und-Dampfkraftwerk umfasst werden.

Entsprechend einer weiteren Ausführungsform des erfindungsgemäßen Energiespeicherkraftwerks ist ebenso vorgesehen, dass der wenigstens eine thermische Speicher seine thermische Energie an das Wasser in dem Wasserkreislauf direkt abgibt, wobei der Wasserkreislauf wenigstens teilweise innerhalb des thermischen Speichers verläuft. Bei direkter Abgabe von thermischer Energie an das Wasser in dem Wasserkreislauf ist zu erwarten, dass der Wirkungsgrad der thermischen Übertragung relativ hoch ist. Zudem kann eine thermische Kopplung des Wasserkreislaufs mit dem thermischen Speicher mitunter durch relativ einfache bauliche Maßnahmen erreicht werden.

Entsprechend einer weiteren Ausführungsform der vorliegenden Erfindung ist vorgesehen, dass die Wandelvorrichtung eine elektrische Widerstandsheizvorrichtung ist. Die Widerstandsheizvorrichtung erlaubt die Umwandlung von elektrischer Energie in thermische Energie mit einem relativ hohen Wirkungsgrad. So ermöglichen geeignete elektrische Widerstände die fast vollständige Umwandlung der elektrischen Energie in thermische Wärme, welche in dem thermischen Speicher zwischengespeichert werden kann. Die Anordnung der elektrischen Widerstandsheizvorrichtung in Bezug auf den thermischen Speicher ist bevorzugt so vorzunehmen, dass beim Übertrag der thermischen Energie auf den thermischen Speicher ein nur relativ geringer thermischer Übertragungswiderstand vorherrscht. Ist der thermische Speicher beispielsweise modular aufgebaut, ist es auch möglich, einzelne Module unterschiedlich anzusteuern, um so eine jeweils unterschiedliche thermische Leistung in die einzelnen Module zu übertragen. Ferner ist es auch bevorzugt, dass jedes der einzelnen Module des thermischen Speichers mit wenigstens einer Wandelvorrichtung zur Wandlung von elektrischer Energie in thermische Energie versehen ist.

Gemäß einem weiteren bevorzugten Aspekt der vorliegenden Erfindung sind die in dem Energiespeicherkraftwerk vorgesehenen wenigstens zwei thermischen Speicher derart ausgebildet, das die Abgabe von thermischer Energie auf zwei unterschiedlichen Temperaturniveaus erfolgt, wobei insbesondere die Übertragung von thermischer Energie an das Wasser in dem Wasserkreislauf an zwei unterschiedlichen Orten des Wasserkreislaufs erfolgt. Damit wird eine hohe Kontrolle und thermische Effizienz der Übertragung von thermischer Energie an das Wasser in dem Wasserkreislauf gewährleistet. Wenn wenigstens einer der zwei thermischen Speicher dafür vorgesehen ist, das Wasser in dem Wasserkreislauf zu verdampfen, kann so zudem auch ein stabiler Wasserdampfkreislauf erzeugt werden, welcher für den Einsatz in einem Dampfprozess erforderlich ist. Ferner können an unterschiedlichen Orten des Wasserkreislaufs unterschiedliche Mengen an thermischer Energie auf den Wasserkreislauf übertragen werden, wodurch auch ein höherer thermischer Gesamtwirkungsgrad resultieren kann.

Gemäß einer besonders bevorzugten Ausführungsform weist der thermische Speicher zur Speicherung von fühlbarer Wärme ein höheres Temperaturniveau auf und dient zur Bereitstellung von thermischer Energie zur Überhitzung von bereits erzeugtem Dampf des Wassers in dem Wasserkreislauf. Der thermische Speicher zur Speicherung der latenten Wärme kann im Vergleich hierzu ein geringeres Temperaturniveau aufweisen und kann zur Bereitstellung von thermischer Energie in einem Verdampfer eingesetzt werden, welcher Wasser in dem Wasserkreislauf in seine Dampfphase überführt.

Gemäß einem weiterführenden Aspekt der dargestellten Ausführungsformen des Energiespeicherkraftwerks kann vorgesehen sein, dass einer der wenigstens zwei thermischen Speicher ein Temperaturniveau von weniger als 400 °C, und einer der wenigstens zwei thermischen Speicher ein Temperaturniveau von mehr als 400 °C aufweist. Diese Temperaturniveaus sind insbesondere geeignet zur Übertragung thermischer Energie an Wasser in einem Wasserkreislauf in Verbindung mit einem Dampfprozess. So kann beispielsweise bei einem Temperaturniveau von weniger als 400 °C das in dem Wasserkreislauf befindliche Wasser durch ausreichenden thermischen Energieübertrag verdampft werden, wobei der Dampf nachfolgend bei einem Temperaturniveau von mehr als 400 °C durch einen weiteren thermischen Energieübertrag aus dem zweiten thermischen Speicher überhitzt wird. Die ausführungsgemäßen Temperaturniveaus sind somit besonders geeignet, zum Einsatz in einem Energiespeicherkraftwerk, welches die elektrische Stromerzeugung mittels einer Dampfturbine erreicht.

Gemäß eines weiteren bevorzugten Ausführungsbeispiels kann das Energiespeicherkraftwerk derart ausgestaltet sein, dass die Stromerzeugungseinheit wenigstens eine Dampfturbine, bevorzugt wenigstens zwei durch den Wasserkreislauf versorgte Dampfturbinen aufweist, wobei der Wasserkreislauf abstromseitig in Bezug auf die erste Dampfturbine zur weiteren Wärmeaufnahme mit wenigstens einem thermischen Speicher zur thermischen Wechselwirkung angeordnet ist. Auf diese Weise kann beispielsweise der aus einer Hochdruck-Dampfturbine austretende Dampf erneut überhitzt werden, um ihn dann einer Mitteldruck-Dampfturbine zuzuführen. Die erneute Überhitzung gewährleistet einen verbesserten Wirkungsgrad bei der Erzeugung von elektrischer Leistung.

Ebenso ist es gemäß weiterer Ausführungsformen möglich, das Wasser in dem Wasserkreislauf auf seinem Weg zwischen den einzelnen Dampfturbinen gezielt durch thermischen Energieeintrag aus einem der thermischen Speicher zu konditionieren. So ist es beispielsweise denkbar, dass der aus einer Mitteldruck-Dampfturbine austretende Dampf noch einmal einer thermischen Konditionierung durch Übertrag von thermischer Wärme aus dem thermischen Speicher konditioniert wird, bevor er in eine Niederdruck-Dampfturbine eingeleitet wird. Auch in dieser Ausführungsform kann der Gesamtwirkungsgrad der Stromerzeugungseinheit erhöht werden.

Gemäß einer ebenfalls bevorzugten Ausführungsform des Energiespeicherkraftwerks ist wenigstens einer der thermischen Speicher, insbesondere der zur Speicherung von latenter Wärme vorgesehene Speicher dazu ausgebildet, Wasser in dem Wasserkreislauf zu verdampfen. Die Verdampfung kann beispielsweise in einer mit einem Verdampfungskessel in Fluidverbindung stehenden Leitung erfolgen.

Gemäß einer weiteren Ausführungsform kann wenigstens einer der thermischen Speicher, insbesondere der zur Speicherung von fühlbarer Wärme vorgesehene Speicher dazu ausgebildet sein, wenigstens teilweise dampfförmiges Wasser in dem Wasserkreislauf zu überhitzen.

Weiterhin ist auch möglich, dass der thermische Speicher, der zur Speicherung von fühlbarer Wärme vorgesehen ist, dazu ausgebildet ist, auf einem im Wesentlichen konstanten Temperaturniveau aufgeladen zu werden bzw. entladen zu werden. Bevorzugt kann dies beim Entladen durch Vorsehen von zwei Reservoirs in dem thermischen Speicher mit flüssigem Wärmespeichermedium erreicht werden, wobei das Wärmespeichermedium in jedem Reservoir auf unterschiedlichen Temperaturniveaus vorliegt. Durch gezielte Mischung der thermischen Energie aus beiden Reservoirs kann folglich ein im Wesentlichen gleichbleibendes Temperaturniveau während der Entladung des thermischen Speichers gewährleistet werden (Zwei-Tank-Lösung).

Entsprechend einer besonders bevorzugten Ausführungsform des erfindungsgemäßen Verfahrens ist vorgesehen, dass wenigstens ein thermischer Speicher mittels Überschussstrom aus dem öffentlichen Stromnetz aufgeladen wird. Demgemäß können Leistungsüberschüsse zu Zeiten entnommen werden, zu welchen der Strompreis verhältnismäßig günstig ist. Diese elektrische Energie wird in thermische Energie überführt und in dem thermischen Speicher solange zwischengespeichert, bis in dem Stromnetz aufgrund von erhöhter Nachfrage ein erhöhter Bedarf gedeckt werden muss. Dieser kann dann zeitlich versetzt mit Hilfe von aus dem thermischen Speicher entnommener thermischer Energie, die mittels der Stromerzeugungseinheit in elektrische Energie überführt wird, gedeckt werden. Da die zu diesem Zeitpunkt erzeugte elektrische Energie zu einem höheren Preis verkauft werden kann, ergibt sich eine vorteilhafte Wirtschaftlichkeit für den Betreiber des Energiespeicherkraftwerks.

Entsprechend einer ebenfalls bevorzugten Ausführungsform des erfindungsgemäßen Verfahrens zum Betreiben eines Energiespeicherkraftwerks ist vorgesehen, dass die Module wenigstens eines der thermischen Speicher zeitlich versetzt zueinander aufgeladen bzw. zur Übertragung von thermischer Energie an das Wasser in dem Wasserkreislauf zeitlich versetzt zueinander entladen werden. Wie weiter oben bereits ausgeführt, kann damit einerseits die Effizienz der thermischen Wärmeübertragung auf das Wasser in dem Wasserkreislauf erhöht werden bzw. die Kontrolle über das gesamte Verfahren zur Rückverstromung verbessert werden.

Weitere Ausführungsformen lassen sich aus den Unteransprüchen entnehmen.

Die nachfolgenden Figuren erläutern die Erfindung anhand konkreter Ausführungsbeispiele. Die Konkretisierung der Erfindung in den Figuren stellt keine Einschränkung hinsichtlich der Allgemeinheit der beanspruchten Erfindung dar. Hierbei zeigen:
- FIG 1: eine erste Ausführungsform des erfindungsgemäßen Energiespeicherkraftwerks in schematischer Darstellung,
- FIG 2: eine zweite Ausführungsform des erfindungsgemäßen Energiespeicherkraftwerks in einer schematischen Darstellung.

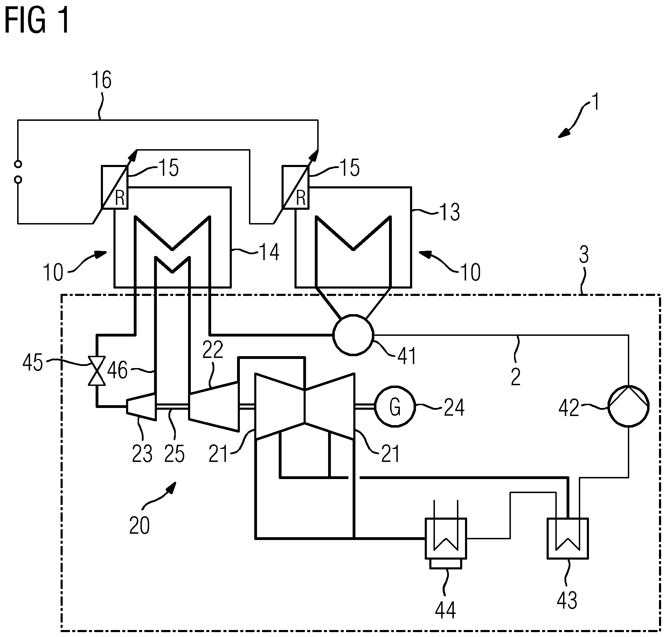

FIG 1 zeigt eine erste bevorzugte Ausführungsform des erfindungsgemäßen Energiespeicherkraftwerks 1 zur elektrischen Stromgewinnung. Das Energiespeicherkraftwerk 1 weist innerhalb eines Kraftwerksblocks 3 eine Stromerzeugungseinheit 20 auf, die zur Erzeugung elektrischer Energie vorgesehen ist. Die Stromerzeugungseinheit 20 umfasst eine Niederdruck-Turbine (ND-Turbine) 21 die axial gekoppelt mit einer Mitteldruck-Turbine (MD-Turbine 22) ist, die ihrerseits wiederum axial gekoppelt mit einer Hochdruck-Turbine (HD-Turbine) 23 ist. Alle drei Turbinen weisen eine gemeinsame Achse 25 auf, mittels derer sie mit einem Generator 24 zur Stromerzeugung in Wirkverbindung stehen. Die Stromerzeugungseinheit 20 wird mit überhitztem Dampf aus dem Wasserkreislauf 2 versorgt. Zur Erzeugung des überhitzten Dampfes wird Wasser in dem Wasserkreislauf 2 durch Übertragung thermischer Energie aus einem der zwei thermischen Speicher 10 zunächst verdampft und in einem anschließenden Schritt der so erzeugte Dampf überhitzt.

Zur Verdampfung des Wassers im Wasserkreislauf 2 kann dieses in ein Wasserreservoir 41 eingeströmt werden, aus welchem wiederum Anteile des Wassers entnommen werden und mittels Übertragung von thermischer Energie aus dem thermischen Speicher 10, welcher als Verdampfer 13 eingesetzt wird, wenigstens teilweise verdampft wird. Der so erzeugte Dampf, bzw. das erzeugte Dampf-Wasser-Gemisch wird zurück in das Wasserreservoir 41 geführt, aus welchem in einem nachfolgenden Schritt der erzeugte Dampf zur Überhitzung entnommen wird. Mittels Übertragung von thermischer Energie aus einem weiteren thermischen Speicher 10, welcher als Überhitzer 14 eingesetzt wird, wird dieser Dampf durch weiteren thermischen Energieeintrag überhitzt und anschließend der Stromerzeugungseinheit 20 zugeführt. Hierbei können, wie dargestellt, Ventile zur Steuerung des Dampfmassenstroms vorgesehen sein.

Hat der überhitzte Dampf in dem Wasserkreislauf 2 einen Teil seiner Energie an die Hochdruck-Turbine 23 der Stromerzeugungseinheit 20 abgegeben, wird er mit Hilfe einer Zwischenüberhitzer-Leitung 46 zur weiteren thermischen Energieübertragung aus dem Überhitzer 14 (thermischer Speicher 10) diesem zugeführt. Nachfolgend wird dieser zwischenüberhitzte Dampf der Mitteldruck-Turbine 22 zugeführt und stromabwärts zu dieser der Niederdruck-Turbine 21. Die von dem Dampf aufgenommene kinetische Energie wird durch die drei Turbinen 21, 22 und 23 in eine Drehung der Achse 25 überführt, durch welche wiederum der Generator 24 zur Stromerzeugung betrieben wird.

Abstromseitig in Bezug auf die Niederdruck-Turbine 21 wird der verbleibende Dampf einem Kondensator 44 zugeführt, in welchem das Wasser auf ein so geringes Temperaturniveau abgekühlt wird, dass es in seine flüssige Phase übergeht. Das in dem Kondensator 44 erzeugte flüssige Wasser wird anschließend zur erneuten Aufwärmung einem Vorwärmer 43 zugeführt, welcher teilweise mit Dampf aus der Niederdruck-Turbine 21 versorgt wird. Das den Vorwärmer 43 verlassende, mit einem erhöhten Energiegehalt versehene Wasser, wird anschließend durch die Kondensatpumpe 42 erneut dem Verdampfer 13 zugeführt.

Gemäß der in FIG 1 gezeigten Ausführungsform ist der thermische Speicher 10, welcher als Verdampfer 13 ausgebildet ist, im Vergleich zum thermischen Speicher 10, welcher als Überhitzer 14 ausgebildet ist, auf einem geringeren Temperaturniveau. Dementsprechend ist es sinnvoll, den Verdampfer 13 als thermischen Speicher zur Speicherung von latenter Wärme auszuführen, wohingegen der Überhitzer 14, der deutlich höhere Temperaturen aufweisen muss, als thermischer Speicher zur Speicherung von fühlbarer Wärme ausgeführt ist.

Zur Aufladung der beiden thermischen Speicher 10 kann bei Bedarf elektrische Energie aus einem elektrischen Versorgungskreislauf 16, also etwa dem öffentlichen Stromnetz entnommen werden, die dann mittels einer oder mehrerer geeigneter Wandelvorrichtungen 15 in thermische Energie überführt wird. Vorliegend sind die beiden thermischen Speicher 10 jeweils mit einer Wandelvorrichtung 15 versehen, die als Widerstandheizvorrichtung ausgeführt ist. Dementsprechend ist es möglich, bei Bedarf elektrische Energie aus dem elektrischen Versorgungskreislauf 16 zu entnehmen und diese als thermische Energie in einem der beiden thermischen Speicher 10 zwischenzuspeichern. Je nach benötigter Energiemenge bzw. je nach erforderlichem Temperaturniveau können die Wandelvorrichtungen 15 individuell eingestellt werden, um den prozessbedingten Erfordernissen zu entsprechen. Diese Einstellung kann bei zahlreichen Ausführungsformen der Erfindung vorgenommen werden.

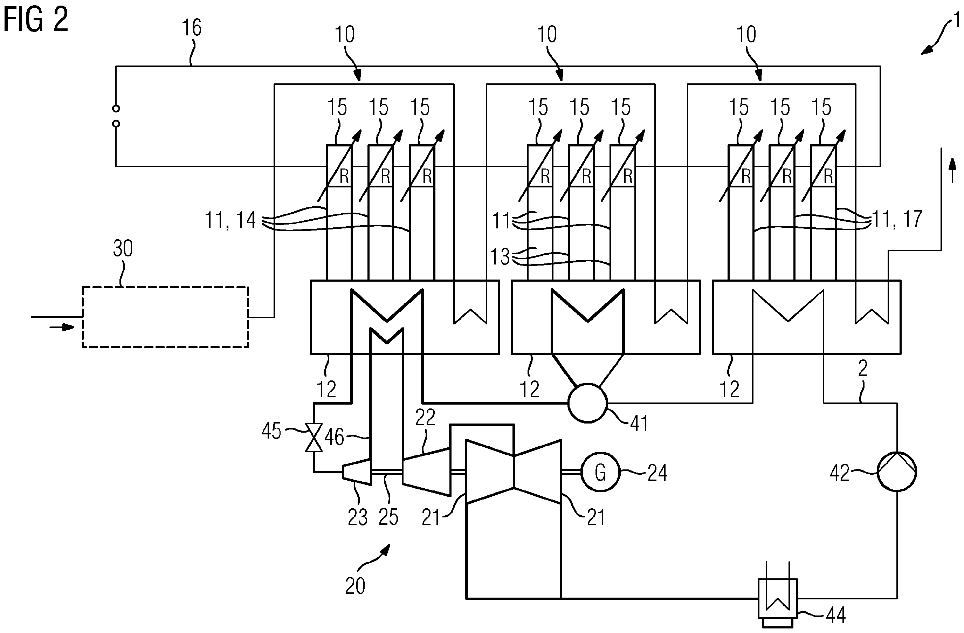

FIG 2 zeigt eine weitere Ausführungsform des erfindungsgemäßen Energiespeicherkraftwerks in einer schematischen Darstellung. Hinsichtlich der Stromerzeugungseinheit 20 unterscheidet sich die in FIG 2 dargestellte Ausführungsform nicht wesentlich von der in FIG 1 dargestellten Ausführungsform.

Ein wesentlicher Unterschied beider Ausführungsformen ist jedoch der, dass die in FIG 2 dargestellte Ausführungsform modular aufgebaute thermische Speicher 10 aufweist, die jeweils mit einem Wärmetauscher 12 in thermischer Verbindung sind. Insgesamt sind drei thermische Speicher 10 vorgesehen, die jeweils aus drei Modulen 11 aufgebaut sind. Die einzelnen Module 11 weisen jeweils eine Wandelvorrichtung 15 auf, die erlaubt, elektrische Energie aus einem elektrischen Versorgungskreislauf 16 in thermische Energie umzuwandeln. Die so erzeugte thermische Energie wird in dem jeweils zugehörigen Modul 11 des thermischen Energiespeichers 10 zwischengespeichert. Je nach Bedarf kann aus diesen Modulen 11 des thermischen Speichers 10 thermische Leistung entnommen und an den Wärmetauscher 12 übertragen werden. Die jeweilige Übertragung kann ausführungsgemäß auch in geeigneter Weise gesteuert oder geregelt erfolgen.

Vergleichbar zu der Ausführungsform gemäß FIG 1, weist auch die Ausführungsform gemäß FIG 2 einen thermischen Speicher 10 auf, der als Verdampfer 13 ausgebildet ist, bzw. einen thermischen Speicher 10, der als Überhitzer 14 ausgebildet ist. Zusätzlich weist die dargestellte Ausführungsform auch noch einen weiteren thermischen Speicher 10 auf, der als Economizer 17 ausgebildet ist und zur Vorwärmung des Wassers in dem Wasserkreislauf 2 dient bevor dieses in das Wasserreservoir 41 und nachfolgend in den dazugehörigen Wärmetauscher 12 zur thermischen Energieübertragung überführt wird. Ausführungsgemäß weist der thermische Speicher 10, welcher als Economizer 17 ausgebildet ist, ein geringeres Temperaturniveau auf, als der thermische Speicher 10, der als Verdampfer 13 ausgebildet ist. Durch den im Vergleich zur Ausführungsform der FIG 1 zusätzlichen thermischen Speicher 10, der als Economizer 17 ausgebildet ist, kann eine verbesserte Kontrolle der thermischen Übertragung, wie auch eine verbesserte Kontrolle der fluiddynamischen Strömungsbedingungen in dem Wasserkreislauf 2 erreicht werden.

Weiterhin unterscheidet sich die Ausführungsform gemäß FIG 2 von der in FIG 1 gezeigten dahingehend, dass der thermische Speicher 12zusätzlich auch noch durch eine externe Wärmequelle 30 mit thermischer Energie versorgt werden können. Die Wärmequelle 30 stellt hierbei bevorzugt thermische Energie aus einem Verbrennungsprozess, besonders bevorzugt Abwärme aus einem Verbrennungsprozess zur Verfügung. Diese kann, je nach Bedarf, in die Wärmetauscher 12 überführt werden, um somit die Menge an thermischer Energie, die an das Wasser in dem Wasserkreislauf 2 übertragen wird, zu erhöhen. Wie dargestellt, kann der Übertrag an thermischer Energie aus der Wärmequelle 30 durch eine Verbindungsleitung seriell in die einzelnen Wärmetauscher 12 nacheinander erfolgen. Alternativ ist jedoch auch eine parallele Übertragung aus der Wärmequelle 30 bzw. eine Individuallösung denkbar. Dem Fachmann ist verständlich, dass eine solche externe Wärmequelle 30 auch grundsätzlich in der Ausführungsform gemäß FIG 1 vorgesehen sein könnte.

## Patentansprüche

1. Energiespeicherkraftwerk (1) zur elektrischen Stromgewinnung, welches auch zur Überführung von elektrischer Energie in thermische Energie geeignet ist, wobei die thermische Energie bis zu einem Zeitpunkt des Bedarfs in wenigstens zwei thermischen Speichern (10) zwischengespeichert werden kann und bei Bedarf zur Erhöhung des Energiegehalts von Wasser in einem Wasserkreislauf (2) abgerufen werden kann, umfassend:
- wenigstens zwei thermische Speicher (10) mit jeweils mindestens einer Wandelvorrichtung (15), die erlaubt, elektrische Energie in thermische Energie direkt oder indirekt zu wandeln, wobei die wenigstens zwei thermischen Speicher (10) durch Zwischenspeicherung dieser thermischen Energie thermisch aufgeladen werden können, und wobei ein thermischer Speicher (10) zur Speicherung von fühlbarer Wärme und ein thermischer Speicher (10) zur Speicherung von latenter Wärme vorgesehen ist, und wobei einer der beiden thermischen Speicher (10) modular aufgebaut ist und mit einem Wärmetauscher (12) in thermischer Verbindung ist, über welchen Wärmetauscher (12) Wärme aus den Modulen (11) des thermischen Speichers (10) mittelbar auf das Wasser in dem Wasserkreislaut übertragen werden kann, wobei jedes der einzelnen Module (11) mit wenigstens einer Wandelvorrichtung (15) zur Wandlung von elektrischer Energie in thermische Energie versehen ist, und wobei die jeweiligen Module (11) bei Bedarf unabhängig voneinander mit thermischer Energie aufgeladen werden Können, sowie wenigstens eine Stromerzeugungseinneit (20), die mit wasser eines Wasserkreislaufs (2), dessen Energiegenalt durch die zwischengespeicherte thermische Energie erhöht wurde, betrieben werden kann, um bei Betrieb elextrischen Strom zu erzeugen.

2. Energiespeicherkrattwerk gemais Anspruch 1, wobei beide thermische Speicher (10) modular aufgebaut sind, und/oder bei Bedarf unabhängig voneinander zur Übertragung von thermischer Energie an das Wasser in dem Wasserkreislauf (2) entladen werden können.

3. Energiespeicherkraftwerk gemäß einem der vorhergehenden Ansprüche, wobei, die Wandelvorrichtung (15) eine elektrische Widerstandheizvorrichtung ist.

4. Energiespeicherkraftwerk gemäß einem der vorhergehenden Ansprüche, wobei, einer der wenigstens zwei thermischen Speicher (10) ein Temperaturniveau von weniger als 400°C und einer der wenigstens zwei thermischen Speicher (10) ein Temperaturniveau von mehr als 400°C aufweist.

5. Energiespeicherkraftwerk gemäß einem der vorhergehenden Ansprüche, wobei, die Stromerzeugungseinheit (20) wenigstens eine Dampfturbine, bevorzugt wenigstens zwei durch den Wasserkreislauf (2) versorgte Dampfturbinen aufweist, wobei der Wasserkreislauf (2) abstromseitig in Bezug auf die erste Dampfturbine zur weiteren Wärmeaufnahme mit wenigstens einem thermischen Speicher (10) zur thermischen Wechselwirkung angeordnet ist.

6. Energiespeicherkraftwerk gemäß einem der vorhergehenden Ansprüche, wobei, wenigstens einer der thermischen Speicher (10), insbesondere der zur Speicherung von latenter Wärme vorgesehene Speicher (10) dazu ausgebildet ist, Wasser in dem Wasserkreislauf (2) zu verdampfen.

7. Energiespeicherkraftwerk gemäß einem der vorhergehenden Ansprüche, wobei, wenigstens einer der thermischen Speicher (10), insbesondere der zur Speicherung von fühlbarer Wärme vorgesehene Speicher (10) dazu ausgebildet ist, wenigstens teilweise dampfförmiges Wasser in dem Wasserkreislauf (2) zu überhitzen.

8. Energiespeicherkraftwerk gemäß einem der vorhergehenden Ansprüche, wobei, der thermische Speicher (10), der zur Speicherung von fühlbarer Wärme vorgesehen ist, dazu ausgebildet ist, auf einem im Wesentlichen konstanten Temperaturniveau aufgeladen zu werden bzw. entladen zu werden.

9. Verfahren zum Betreiben eines Energiespeicherkraftwerks nach einem der vorhergehenden Ansprüche, wobei, es die folgenden Schritte aufweist:
- Betreiben der wenigstens einen Wandelvorrichtung (15), um elektrische Energie in thermische Energie direkt oder indirekt zu wandeln, wobei wenigstens einer der wenigstens zwei thermischen Speicher (10) durch Zwischenspeicherung dieser thermischen Energie thermisch aufgeladen wird, wobei weiterhin einer der thermischen Speicher (10) modular aufgebaut ist und mit einem Wärmetauscher (12) in thermischer Verbindung ist, und wobei jedes der einzelnen Module (11) des thermischen Speichers (10) mit wenigstens einer Wandelvorrichtung (15) zur Wandlung von elektrischer Energie in thermische Energie versehen ist, und wobei die Module (11) unabhängig voneinander mit thermischer Energie aufgeladen werden;
- Übertragen von Wärme über den Wärmetauscher (12) aus den Modulen (11) des thermischen Speichers (10) mittelbar auf das Wasser in dem Wasserkreislauf;
- Betreiben der wenigstens einen Stromerzeugungseinheit (20) mit Hilfe des Wassers in dem Wasserkreislauf (2), dessen Energiegehalt durch die zwischengespeicherte thermische Energie aus dem wenigstens einen thermischen Speicher (10) erhöht wurde, um bei Betrieb elektrischen Strom zu erzeugen;
wobei insbesondere ein thermischer Speicher (10) temperaturgesteuert aufgeladen und/oder entladen wird.

10. Verfahren nach Anspruch 9, wobei, wenigstens ein thermischer Speicher (10) mittels Überschussstrom aus dem öffentlichen Stromnetz aufgeladen wird.

11. Verfahren zum Betreiben eines Energiespeicherkraftwerks nach Anspruch 2 bis 8, wobei, die Module (11) wenigstens eines der thermischen Speicher (10) zeitlich versetzt zueinander aufgeladen bzw. zur Übertragung von thermischer Energie an das Wasser in dem Wasserkreislauf (2) zeitlich versetzt zueinander entladen werden.

## Claims

1. Energy storage power plant (1) for generating electrical power which is also suitable for converting electrical energy into thermal energy, wherein the thermal energy can be stored temporarily in at least two thermal storage tanks (10) until it is needed and be retrieved when needed in order to increase the energy content of water in a water circuit (2), comprising:
- at least two thermal storage tanks (10), each with at least one converting device (15) which enables electrical energy to be converted directly or indirectly into thermal energy, wherein the at least two thermal storage tanks (10) can be thermally charged by temporarily storing this thermal energy, and wherein a thermal storage tank (10) for storing sensible heat and a thermal storage tank (10) for storing latent heat are provided, and wherein one of the two thermal storage tanks (10) has a modular structure and is thermally connected to a heat exchanger (12), via which heat exchanger (12) heat can be transmitted indirectly from the modules (11) of the thermal storage tank (10) to the water in the water circuit, wherein each of the individual modules (11) is provided with at least one converting device (15) for converting electrical energy into thermal energy, and wherein the respective modules (11) can be charged when needed with thermal energy independently of each other, and at least one power generation unit (20) which can be operated with water in a water circuit (2), the energy content of which was increased by the temporarily stored thermal energy, in order to generate electrical power during operation.

2. Energy storage power plant according to Claim 1,
wherein both thermal storage tanks (10) have a modular structure and/or can be discharged as necessary independently of each other in order to transmit thermal energy to the water in the water circuit (2).

3. Energy storage power plant according to either of the preceding claims,
wherein the converting device (15) is an electric resistance heating device.

4. Energy storage power plant according to one of the preceding claims,
wherein one of the at least two thermal storage tanks (10) has a temperature level of less than 400°C and one of the at least two thermal storage tanks (10) has a temperature level of more than 400°C.

5. Energy storage power plant according to one of the preceding claims,
wherein the power generation unit (20) has at least one steam turbine, preferably at least two steam turbines supplied by the water circuit (2), wherein the water circuit (2) is arranged downstream with respect to the first steam turbine in order to receive further heat with at least one thermal storage tank (10) for thermal conversion.

6. Energy storage power plant according to one of the preceding claims,
wherein at least one of the thermal storage tanks (10), in particular the storage tank (10) provided to store latent heat, is designed to evaporate water in the water circuit (2).

7. Energy storage power plant according to one of the preceding claims,
wherein at least one of the thermal storage tanks (10), in particular the storage tank (10) provided to store sensible heat, is designed to superheat water that is at least partially in the form of steam in the water circuit (2).

8. Energy storage power plant according to one of the preceding claims,
wherein the thermal storage tank (10) that is provided to store sensible heat is designed to be charged or discharged at an essentially constant temperature level.

9. Method for operating an energy storage power plant according to one of the preceding claims,
wherein it has the following steps:
- operating the at least one converting device (15) in order to convert electrical energy directly or indirectly into thermal energy, at least one of the at least two thermal storage tanks (10) being thermally charged by temporarily storing this thermal energy, wherein moreover one of the thermal storage tanks (10) has a modular structure and is thermally connected to a heat exchanger (12), and wherein each of the individual modules (11) of the thermal storage tanks (10) is provided with at least one converting device (15) for converting electrical energy into thermal energy, and wherein the modules (11) are charged with thermal energy independently of each other;
- transmitting heat via the heat exchanger (12) from the modules (11) of the thermal storage tank (10) indirectly to the water in the water circuit;
- operating the at least one power generation unit (20) with the aid of the water in the water circuit (2), the energy content of which was increased by the temporarily stored thermal energy from the at least one thermal storage tank (10), in order to generate electrical power during operation;
wherein a thermal storage tank (10) is in particular charged and/or discharged in a temperature-controlled fashion.

10. Method according to Claim 9,
wherein at least one thermal storage tank (10) is charged by means of excess electricity from the public electricity grid.

11. Method for operating an energy storage power plant according to Claims 2 to 8,
wherein the modules (11) of at least one of the thermal storage tanks (10) are charged at different times or are discharged at different times in order to transmit thermal energy to the water in the water circuit (2).

## Revendications

1. Centrale (1) d'accumulation d'énergie pour l'obtention de courant électrique, qui est propre aussi à la transformation d'énergie électrique en énergie thermique, dans laquelle l'énergie thermique peut être accumulée intermédiairement jusqu'à ce que l'on en est besoin dans au moins deux accumulateurs (10) thermiques et peut, en cas de besoin, être appelée pour augmenter le contenu en énergie de l'eau d'un circuit (2) d'eau, comprenant:
- au moins deux accumulateurs (10) thermiques ayant chacun au moins un dispositif (15) de transformation qui permet de transformer de l'énergie électrique directement ou indirectement en énergie thermique, les au moins deux accumulateurs (10) thermiques pouvant être chargés thermiquement par accumulation intermédiaire de cette énergie thermique et dans laquelle un accumulateur (10) thermique est prévu pour l'accumulation de chaleur sensible et un accumulateur (10) thermique pour l'accumulation de chaleur latente et dans laquelle l'un des deux accumulateurs (10) thermiques est de constitution modulaire et est en liaison thermique avec un échangeur de chaleur (12), par lequel échangeur de chaleur (12) de la chaleur peut être transférée des modules (11) de l'accumulateur (10) thermique indirectement à l'eau du circuit d'eau, dans laquelle chacun des modules (11) individuels est pourvu d'au moins un dispositif (15) de transformation pour transformer de l'énergie électrique en énergie thermique et dans laquelle les modules (11) respectifs peuvent en cas de besoin être chargés indépendamment les uns des autres d'énergie thermique, ainsi qu'au moins une unité (20) de production de courant électrique, qui peut fonctionner par de l'eau d'un circuit (2) d'eau dont le contenu d'énergie a été augmenté par l'énergie thermique accumulée intermédiairement, pour produire en fonctionnement du courant électrique.

2. Centrale d'accumulation d'énergie suivant la revendication 1, dans laquelle les deux accumulateurs (10) thermiques sont de constitution modulaire,
**caractérisée en ce que**
au moins l'un, de préférence les deux accumulateurs (10) thermiques sont de constitution modulaire, les modules (11) respectifs pouvant en cas de besoin être chargés indépendamment l'un de l'autre d'énergie thermique et/ou en cas de besoin être déchargés indépendamment l'un de l'autre pour la transmission d'énergie thermique à l'eau du circuit (2) d'eau.

3. Centrale d'accumulation d'énergie suivant l'une des revendications précédentes, dans laquelle le dispositif (15) de transformation est un dispositif de chauffage par résistance électrique.

4. Centrale d'accumulation d'énergie suivant l'une des revendications précédentes, dans laquelle
l'un des au moins deux accumulateurs (10) thermiques a un niveau de température plus bas que 400°C et l'un des au moins deux accumulateurs (10) thermiques a un niveau de température plus haut que 400°C.

5. Centrale d'accumulation d'énergie suivant l'une des revendications précédentes, dans laquelle
l'unité (20) de production de courant électrique a au moins une turbine à vapeur, de préférence au moins deux turbines à vapeur alimentées par le circuit (2) d'eau, le circuit (2) d'eau étant, pour absorber encore de la chaleur, disposé en interaction thermique avec au moins un accumulateur (10) thermique, en aval de la première turbine à vapeur.

6. Centrale d'accumulation d'énergie suivant l'une des revendications précédentes, dans laquelle
au moins l'un des accumulateurs (10) thermiques, de préférence l'accumulateur (10) prévu pour l'accumulation de chaleur latente, est constitué pour évaporer de l'eau du circuit (2) d'eau.

7. Centrale d'accumulation d'énergie suivant l'une des revendications précédentes, dans laquelle
au moins l'un des accumulateurs (10) thermiques, notamment l'accumulateur (10) prévu pour l'accumulation de chaleur sensible, est constitué pour surchauffer au moins en partie de l'eau sous forme de vapeur du circuit (2) d'eau.

8. Centrale d'accumulation d'énergie suivant l'une des revendications précédentes, dans laquelle
l'accumulateur (10) thermique, qui est prévu pour l'accumulation de chaleur sensible, est constitué pour être chargé ou déchargé jusqu'à un niveau de température sensiblement constant.

9. Procédé pour faire fonctionner une centrale d'accumulation d'énergie suivant l'une des revendications précédentes,
dans lequel
il a les stades suivants :
- on fait fonctionner le au moins un dispositif (15) de transformation pour transformer directement ou indirectement de l'énergie électrique en énergie thermique, au moins l'un des au moins deux accumulateurs (10) thermiques étant chargé thermiquement par accumulation intermédiaire de cette énergie thermique, l'un des accumulateurs (10) thermiques étant en outre de constitution modulaire et étant en liaison thermique avec un échangeur de chaleur (12) et chacun des divers modules (11) de l'accumulateur (10) thermique étant pourvu d'au moins un dispositif (15) de transformation pour transformer de l'énergie électrique en énergie thermique et on charge les modules (11) d'énergie thermique indépendamment les uns des autres ;
- on transfert de la chaleur par l'échangeur de chaleur (12) des modules (11) de l'accumulateur (10) thermique indirectement à l'eau du circuit d'eau ;
- on fait fonctionner la au moins une unité (20) de production de courant électrique à l'aide de l'eau du circuit (2) d'eau dont le contenu d'énergie a été augmenté par l'énergie thermique accumulée intermédiairement du au moins un accumulateur (10) thermique, afin de produire en fonctionnement du courant électrique ;
dans lequel on charge et/ou on décharge de manière réglée en température un accumulateur (10) thermique.

10. Procédé suivant la revendication 9,
dans lequel
on charge au moins un accumulateur (10) thermique au moyen d'un courant en excès du secteur de courant public.

11. Procédé pour faire fonctionner une centrale d'accumulation d'énergie suivant l'une quelconque des revendications 2 à 8,
dans lequel
on charge les modules (11) d'au moins l'un des accumulateurs (10) thermiques d'une manière décalée dans le temps les uns par rapport aux autres ou, pour transmettre de l'énergie thermique à l'eau du circuit d'eau, on les décharge d'une manière décalée dans le temps les uns par rapport aux autres.
